# EUROPEAN PATENT APPLICATION

(11) **EP 2 911 468 A1**
(43) Date of publication of application: **26.08.2015**
(21) Application number: 13846926.7
(22) Date of filing: 28.08.2013
(51) Int. Cl.: H04W 88/06

(54) **METHOD, DEVICE AND TERMINAL FOR REALIZING APPLICATION OF INTERNET OF THINGS**

(30) Priority: 19.10.2012 CN 201210402599
(71) Applicant: ZTE Corporation, Shenzhen, Guangdong 518057 (CN)
(72) Inventor: HUO, Dongfeng, Shenzhen Guangdong 518057 (CN); XING, Xiaojiang, Shenzhen Guangdong 518057 (CN); LI, Yu, Shenzhen Guangdong 518057 (CN); MENG, Jun, Shenzhen Guangdong 518057 (CN)
(74) Representative: Brunazzi, Stefano
(86) International application number: PCT/CN2013/082453
(87) International publication number: WO 2014/059827

(57) **Abstract**

A method, device and terminal for implementing an Internet of Things (IoT) application are provided. The method includes: the terminal interacting with an IoT via an SIP network, wherein the terminal supports an SIP protocol and possesses a function of communicating with an IoT device. Using the terminal which supports an SIP protocol and possesses a function of communicating with the IoT device, the solution can execute the interaction between the terminal and the IoT via the SIP network, and implement the IoT application on the SIP network.

## Description

### Technical Field

The present invention relates to the field of communications, and in particular to a method, device and terminal for implementing an Internet of Things (IoT) application.

### Background

At present, networks using session initiation protocol (SIP), such as a soft switch network and an IP multimedia sub-system (IMS) provide various services including voice over IP (VOIP), presentation, instant messages, etc., and the user plane covered is very wide. At present, the transformation of the voice of all the public switched telephone networks has basically completed, many operators deploy IMS and/or soft switch networks and have a large number of user groups. At present, services provided by the SIP network are mainly conversational multimedia services, and the basic control signalling SIP protocol of the SIP network is mainly intended for this kind of service.

As the key direction of the development of a country and operators, the Internet of Things is jointly promoted by the country, the local government and the operators. With the development of the IoT, especially the development of intelligent home services, the IoT in related technologies uses the manner that the terminal is directly communicated with the IoT to provide an IoT application and cannot fully use the existing SIP network and SIP terminal.

### Summary

For the problem that the terminal is directly communicated with the IoT and cannot make full use of the existing SIP network and terminal in the related technologies, the embodiments of the present invention provide a method, device and terminal for implementing an IoT application to at least solve the above-mentioned problem.

According to one embodiment of the present invention, provided is a method for implementing an IoT application. The method includes: the terminal interacting with the IoT via an SIP network, wherein the terminal supports an SIP protocol and possesses a function of communicating with the IoT device.

In an example embodiment, the terminal interacting with the IoT via the SIP network includes: the terminal acquiring data from an IoT device, encapsulating the data in an SIP manner, and sending the encapsulated data to the IoT via the SIP network; and/or the terminal receiving information sent by the IoT via the SIP network and performing operation on the IoT device according to the information.

In an example embodiment, the terminal sending the encapsulated data to the IoT via the SIP network includes: the terminal sending the encapsulated data to the SIP network; the SIP network receiving the encapsulated data, and judging whether the received data meet a trigger strategy of the IoT application; and if the received data meet the trigger strategy of the IoT application, the SIP network sending the received data to the IoT.

In an example embodiment, the terminal performing the operation on the IoT device according to the information includes: the terminal converting the information to be of a format supported by the IoT device and sending the converted information to the IoT device.

In an example embodiment, before the terminal interacting with the IoT via the SIP network, the method further includes: the terminal receiving a control message sent by a control apparatus via the SIP network, wherein the control message is used for indicating the terminal to interact with the IoT according to the control message.

In an example embodiment, before the terminal receiving the control message sent by the control apparatus via the SIP network, the method further includes: the terminal receiving a capability acquisition request sent by the control apparatus via the SIP, wherein the capability acquisition request is used for acquiring capability information of the terminal; the terminal reporting the capability information of the terminal to the control apparatus via the SIP network; and the control apparatus sending the control message to the terminal according to the capability information of the terminal.

According to another embodiment of the present invention, provided is a device for implementing an IoT application. The device for implementing the IoT application includes an interaction component, configured to interact with the IoT via an SIP network, wherein the interaction component supports an SIP protocol and possesses a function of communicating with an IoT device.

In an example embodiment, the interaction component includes: a first processing unit, configured to acquire data from the IoT device, encapsulate the data in an SIP manner, and send the encapsulated data to the IoT via the SIP network; and/or a second processing unit, configured to receive information sent by the IoT via the SIP network and perform operation on the IoT device according to the information.

In an example embodiment, the second processing unit includes: a converting unit, configured to convert the received information to be of a format supported by the IoT device; and a sending unit, configured to send the converted information to the IoT device.

In an example embodiment, the device also includes a receiving component, configured to receive a control message sent by a control apparatus via the SIP network, wherein the control message is used for indicating the device for implementing the IoT application to interact with the IoT according to the control message.

In an example embodiment, the receiving component is also configured to receive a capability acquisition request sent by the control apparatus via the SIP, wherein the capability acquisition request is used for acquiring capability information of the device for implementing the IoT application; and the device for implementing the IoT application also includes a sending component, configured to report the capability information of the device for implementing the IoT application to the control apparatus via the SIP network.

According to another embodiment of the present invention, provided is a terminal including the device for implementing the IoT application provided by any one of the example embodiments of the present invention.

In the embodiments of the present invention, the terminal interacts with the IoT via the SIP network, wherein the terminal supports an SIP protocol and possesses a function of communicating with the IoT device. Using the terminal which supports an SIP protocol and possesses a function of communicating with the IoT device, the solution provided by the embodiments of the present invention can execute the interaction between the terminal and the IoT via SIP network, and implement the IoT application on the SIP network.

### Brief Description of the Drawings

Drawings, provided for further understanding of the present invention and forming a part of the specification, are used to explain the present invention together with embodiments of the present invention rather than to limit the present invention. In the drawings:
Fig. 1 is a structural block diagram of an example interaction component according to an embodiment of the present invention;
Fig. 2 is a structural block diagram of an example second processing unit according to an embodiment of the present invention;
Fig. 3 is a structural block diagram I of an example device for implementing an IoT application according to an embodiment of the present invention;
Fig. 4 is a structural block diagram II of an example device for implementing an IoT application according to an embodiment of the present invention;
Fig. 5 is a flowchart of a method for implementing an IoT application according to an embodiment of the present invention;
Fig. 6 is a schematic diagram of a system of the IoT according to an embodiment of the present invention;
Fig. 7 is a flowchart of control in the session process according to an embodiment of the present invention;
and Fig. 8 is a flowchart of control without session process according to an embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

According to an embodiment of the present invention, a device for implementing an IoT application is provided. The device mainly includes an interaction component, configured to interact with the IoT via an SIP network, wherein the interaction component supports an SIP protocol and possesses a function of communicating with an IoT device.

By means of the present embodiment, the interaction component interacts with the IoT via the SIP network, wherein the interaction component supports an SIP protocol and possesses a function of communicating with an IoT device. Using the interaction component which supports an SIP protocol and possesses a function of communicating with the IoT device, the embodiment of the present invention can implement the interaction between the interaction component and the IoT via the SIP network, and implement the IoT application on the SIP network.

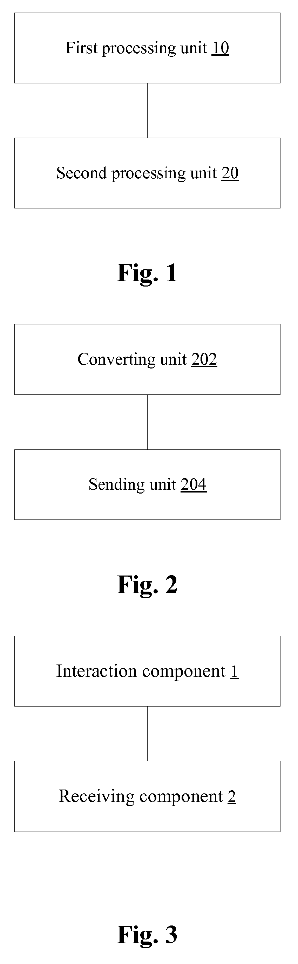

Fig. 1 is a structural block diagram of an example interaction component according to an embodiment of the present invention. As shown in Fig. 1, the interaction component may include a first processing unit **10,** configured to acquire data from the IoT device, encapsulate the data in an SIP manner, and send the encapsulated data to the IoT via the SIP network; and/or a second processing unit **20,** configured to receive information sent by the IoT via the SIP network and perform operation on the IoT device according to the information.

In the interaction component as shown in Fig. 1, the first processing unit **10** acquires data from the IoT device, encapsulates the data in an SIP manner, and sends the encapsulated data to the IoT via the SIP network. After the IoT receives the data, the service logic of the IoT can be executed so as to implement the IoT application corresponding to the data. The second processing unit **20** receives information sent by the IoT via the SIP network and performs operations, such as controlling the IoT device or sending data to the IoT device, on the IoT device according to the information.

In the embodiment of the present invention, the first processing unit **10** may interact with the IoT, such as reporting to the IoT or sending data. The second processing unit **20** also may interact with the IoT, such as receiving information sent by the IoT or controlling the IoT device. The first processing unit **10** and the second processing unit **20** also may together interact with the IoT, for example, when a request from the IoT is received, or data meeting conditions are detected, the first processing unit **10** sends data requested by the IoT or detected data to the loT; the IoT executes the IoT application according to the data sent by the first processing unit **10** to feed back control information to the second processing unit or send data to the IoT device, and the second processing unit **20** controls the IoT device according to the control information or sends data to the IoT.

Fig. 2 is a structural block diagram of an example second processing unit according to an embodiment of the present invention. As shown in Fig. 2, the second processing unit **20** may include: a converting unit **202,** configured to convert the received information to be of a format supported by the IoT device; and a sending unit **204** coupled with the converting unit **202,** configured to send the converted information to the IoT device.

In one implementation of an embodiment of the present invention, when the first processing unit **10** encapsulates the data acquired from the IoT device in an SIP manner, the data may be carried in an original SIP message in an SIP protocol, for example, the existing SIP message is reused, such as INVITE, MESSAGE and INFO. An indication may be added in a message header to indicate the type (such as a control command or service data) of the data, and the specific data may be described in the message header, a session description protocol (SDP) or an extensible markup language (XML). Furthermore, the type of the SIP message also may be extended.

In an embodiment of the present invention, the device for implementing the IoT application also may interact with a control apparatus via the SIP network, and the control apparatus controls the device for implementing the IoT application to interact with the IoT so as to implement the IoT application. The device for implementing the IoT application interacted with a control apparatus is described below.

Fig. 3 is a structural block diagram I of an example device for implementing an IoT application according to an embodiment of the present invention. As shown in Fig. 3, the device may include: a receiving component **2,** coupled with the interaction component **1** (i.e., the above-mentioned interaction component) and configured to receive a control message sent by the control apparatus via the SIP network, wherein the control message is used for indicating the terminal to interact with the IoT according to the control message.

In an embodiment of the present invention, the second processing unit **20** of the device for implementing the IoT application may interact with the IoT or interact with the IoT device according to the control information from the control apparatus so as to implement the IoT application. In practical application, the capacity supported by the device may be configured according to actual requirements. Therefore, when the control apparatus controls the device to interact with the IoT, the capability information of the device may be acquired firstly so as to match the control information with the capability of the device.

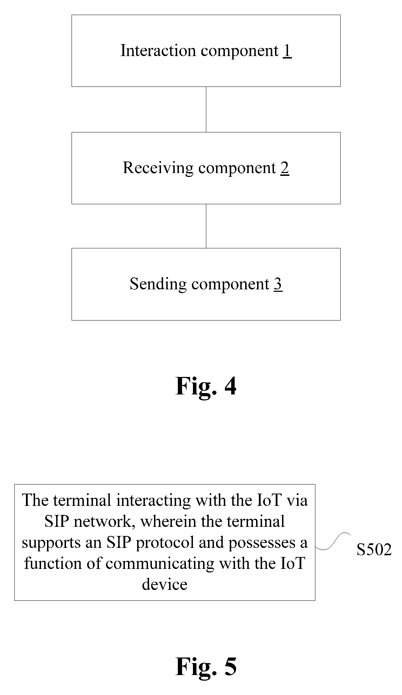

Fig. 4 is a structural block diagram II of an example device for implementing an IoT application according to an embodiment of the present invention. In the device as shown in Fig. 4, the receiving component **2** is also configured to receive a capability acquisition request sent by the control apparatus via the SIP, wherein the capability acquisition request is used for acquiring capability information of the terminal. The device may also include a sending component **3,** coupled to the receiving component **2** and configured to report the capability information of the terminal to the control apparatus via the SIP network.

In an embodiment of the present invention, the control apparatus may acquire data of the IoT device from the device for implementing the IoT application. Correspondingly, the above-mentioned sending component **3** may be also configured to report data of the IoT device to the control apparatus.

According to an embodiment of the present invention, provided is a terminal including the device for implementing an IoT application provided by any one of the above-mentioned embodiments of the present invention.

In an embodiment of the present invention, an existing SIP terminal may be used, an interface for communicating with the IoT device is added in the existing SIP terminal, e.g., by extending a bound interface of the SIP terminal, so as to implement the communication of the SIP terminal with the IoT device. Of course, an interface for communicating with the IoT also may be used as an external device of the existing SIP terminal, the communication with the IoT device is performed via the external device (such as the above-mentioned device provided by the embodiment of the present invention), and data of the IoT device are encapsulated and de-encapsulated in an SIP manner via the external device.

Taking an SIP terminal in an IMS network in a house as an example, health information of a user in the house can be acquired by extending the connection between the SIP terminal and health care equipment in the house, these information can be provided using an extended SIP message via a dedicated residential gateway device, or can be acquired and displayed by other terminals (such as an SIP telephone) in an IMS network via the original communication process.

For example, the SIP terminal in an IMS network in the house can obtain an entrance guard of a house and information of other infrared detection equipment playing a security role via a short-distance communication interface, the information can be uploaded to an application system of IoT in the IMS network using an extended SIP message. Based on this, the IoT can provide a unified home security service, for example, the security information is provided to a user or a security company, or other information is jointly collected according to a control strategy so as to reserve relevant evidences.

Furthermore, by means of the terminal provided by the embodiment of the present invention, various services of various IoTs can be developed in a relatively simple way in the existing SIP network and related network element, these services can well interact with other network elements of the existing SIP network, and these services can be supported by the existing modes, which is beneficial for the popularization of the services of the IoT.

An embodiment of the present invention provides a processor which is configured to execute program units stored in a storage, components included in these program units may be the components referred in any one of the above embodiments.

According to an embodiment of the present invention, a method for implementing an IoT application is also provided. The terminal and/or the device provided in the embodiments of the present invention are used to implement IoT application.

Fig. 5 is a flowchart of a method for implementing an IoT application according to an embodiment of the present invention. As shown in Fig. 5, the method mainly includes: step S502, the terminal interacts with the IoT via an SIP network, wherein the terminal supports an SIP protocol and possesses a function of communicating with the IoT device.

By means of the embodiment of the present invention, the terminal interacts with the IoT via SIP network, wherein the terminal supports an SIP protocol and possesses a function of communicating with the IoT device. Using the terminal which supports an SIP protocol and possesses a function of communicating with the IoT device, the embodiment of the present invention can execute the interaction between the terminal and the IoT via the SIP network, and implement the IoT application on the SIP network.

In one implementation of an embodiment of the present invention, the terminal interacting with the IoT via the SIP network may include: the terminal acquiring data from an IoT device, encapsulating the data in an SIP manner, and sending the encapsulated data to the IoT via the SIP network; and/or the terminal receiving information sent by the IoT via the SIP network and performing operation on the IoT device according to the information.

For example, when acquiring data meeting conditions or receiving a request from the IoT, the terminal may send data acquired from the IoT device to the IoT via the SIP network, after receiving the data, the IoT executes the service logic of the IoT according to the data so as to implement the IoT application. When executing IoT application, the IoT can interact with the terminal, for example sending a control command to the terminal for the terminal to control the IoT device, or sending data, such as indication for changing configurations of the IoT device, to the IoT device. In an example embodiment, when data are sent to the IoT device, the operations performed by the terminal to the IoT device according to the information of the IoT may include: the terminal converting the information sent by the IoT to be of a format supported by the IoT device and sending converted information to the IoT device.

In one implementation of an embodiment of the present invention, when the first processing unit **10** encapsulates the data acquired from the IoT device in an SIP manner, the data may be carried in an original SIP message in an SIP protocol, for example, the existing SIP message is reused for self-examination, such as INVITE, MESSAGE and INFO. An indicator may be added in a message header to indicate the type (such as a control command or service data) of the data, and the specific data may be described in the message header, an SDP or an XML. Furthermore, the type of the SIP message may be extended.

The terminal is communicated with the IoT device, after acquiring data from the IoT device, the terminal sends the encapsulated data to the IoT via the SIP network. In the process, the SIP network may provide a strategy control of the IoT application. Therefore, in one implementation of an embodiment of the present invention, the terminal sending the encapsulated data to the IoT via the SIP network may include: the terminal sending the encapsulated data to the SIP network; the SIP network receiving the encapsulated data, and judging whether the received data meet a trigger strategy of the IoT application; and if the received data meet the trigger strategy of the IoT application, the SIP network sending the received data to the IoT.

In an embodiment of the present invention, a device for implementing the IoT application may interact with a control apparatus via the SIP network, and the control apparatus controls the device for implementing the IoT application to interact with the IoT so as to implement the IoT application. The method for implementing the IoT application interacted with a control apparatus is described below.

In an example embodiment, the terminal may interact with the IoT via the SIP network and also may receive a control message sent by the control apparatus via the SIP network, wherein the control message is used for indicating the terminal to interact with the IoT according to the control message.

In an embodiment of the present invention, the terminal interacts with the IoT or interacts with the IoT device according to the control information from the control apparatus so as to implement the IoT application. In practical application, the capacity supported by the device may be configured according to actual requirements. Therefore, when the control apparatus controls the device to interact with the IoT, the capability information of the device may be acquired firstly so as to match the control information with the capability of the device.

For achieving the above-mentioned purpose, in one implementation of an embodiment of the present invention, before the terminal receives the control message sent by the control apparatus via the SIP network, a capability acquisition request also may be sent to the terminal, wherein the capability acquisition request is used for acquiring capability information of the terminal, the terminal receives the capability acquisition request sent by the control apparatus via SIP, and reports the capability information of the terminal to the control apparatus via the SIP network, and the control apparatus sends a control message to the terminal according to the capability information of the terminal.

The above-mentioned solution of the embodiment of the present invention is described below by taking a method for implementing an IoT application based on the SIP network using an existing SIP terminal as an example.

In this embodiment, the terminal in the SIP network as described above may be a gateway device of the IoT, and a southbound interface of this terminal may be extended to implement the connection with various IoT apparatus (such as sensing and/or executing apparatus), thereby implementing the collection of information of various "things" and the control to the operations of "things". Information of the part of "things" in the terminal may be carried by an SIP message, and the SIP message may be extended partly.

The SIP network supports the analysis to the protocol of a related terminal, if a related trigger condition is met, related information and subsequent messages of this session are forwarded to the IoT service for processing. The IoT (a service platform of the IoT) processes the above-mentioned information and provides various IoT services.

In the embodiment of the present invention, the SIP is extended so that the SIP message can carry various control commands. The methods which can be selected include but not limited to: (1) extending the type of the SIP message, adding a control type message, and describing specific control command in the message header, the SDP or the XML; and (2) reusing the existing SIP message type, such as INVITE, MESSAGE and INFO, wherein an indicator may be added in a message header to indicate that this is a control message, and the specific control command may be described in the message header, the SDP or the XML.

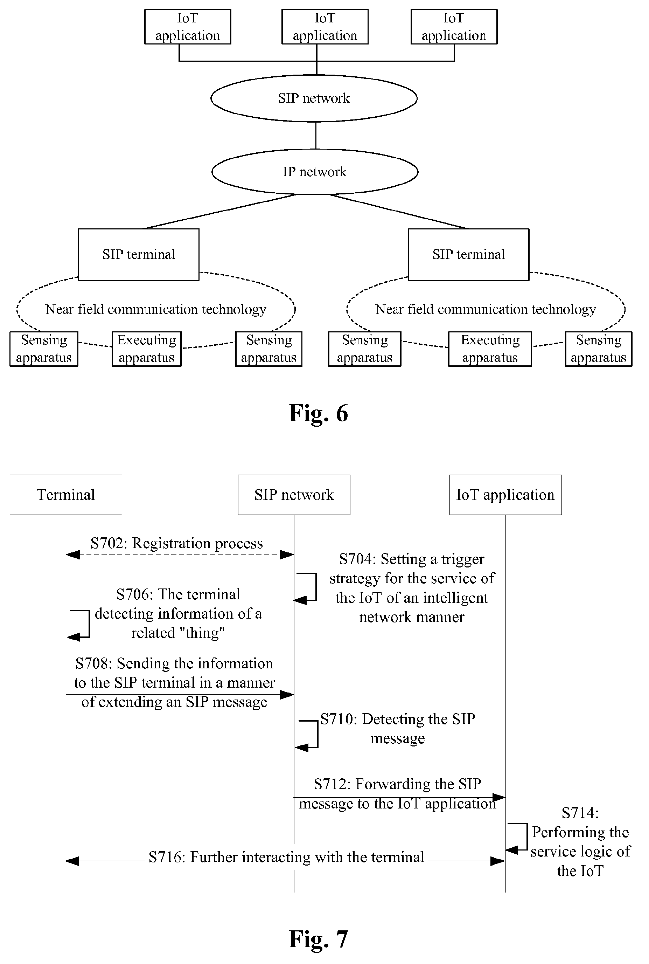

Fig. 6 is a schematic diagram of a system of the IoT according to an embodiment of the present invention. As shown in Fig. 6, the system mainly includes an SIP terminal, an IP network, an SIP network, and an IoT application of an intelligent network service mode in the SIP network.

In the system as shown in Fig. 6, on one aspect, the SIP terminal communicates with a sensing apparatus or an executing device of the IoT via a southbound near field communication network, so as to collect data of "things" sensed by related apparatus and execute operations on "things". On the other aspect, various data obtained by the southbound interface and various operations which are supported are encapsulated in an SIP manner, and the SIP protocol is extended partly.

In the embodiment of the present invention, a near field communication network includes but not limited to various wired and wireless short-distance communication networks such as WI-FI, Bluetooth, ZigBee and IrDA. The sensing apparatuses include but not limited to various sensing apparatuses for collecting temperature, humidity, alarming, images, physical parameters, etc. The executing apparatus includes but not limited to an electronic switch, a regulator, a controller, etc.

In the system as shown in Fig. 6, the IP network may be a current communication IP network and can be a wired or wireless network. The SIP network may be a current SIP core network and include but not limited to an IMS network and a soft switch network. In the present system, the SIP network supports the routing and transmission of the extended SIP message, supports the analysis of this type of messages according to a set strategy, and triggers related information to the IoT application.

In the system as shown in Fig. 6, according to the information of the terminal, the IoT application executes related service logics and provides various services of the IoT, including but not limited to home security services, home control services, electricity/water/gas information collection services, medical services, family energy-saving home services, etc.

The method for implementing the IoT application in the system as shown in Fig. 6 is described below.

Fig. 7 is a flowchart of a control in the session process according to an embodiment of the present invention. As shown in Fig. 7, the process may include steps S702 to S716.

Step S702 is the registration process of the terminal, which is the same as a registration process of the terminal in an SIP network.

In Step S704, an apparatus in the SIP network sets a filtering strategy of the service of the IoT.

In the embodiment of the present invention, the above-mentioned strategy may include but not limited to the following and may be a combination of the following: a terminal list, an SIP request line, an SIP header, information in an SIP message body. When a corresponding condition is met, this message and all the messages of this session will be forwarded to a corresponding server of the IoT for processing, for example, when certain apparatuses report information of the IoT in an INFO manner, or a destination address part in the SIP header is a server of the IoT, or ALARM encapsulated in an XML manner is present in the SIP body, etc.

In Step S706, the SIP terminal acquires information of a related "thing" via a south near field communication interface, such as detecting an infrared and smoke alarm in the house.

In Step S708, the SIP terminal sends the above-mentioned information to an address of the IoT application using INFO or MESSAGE of SIP, and the address needs to be set by the SIP terminal in advance.

In the embodiment of the present invention, in the SIP header, a kind of Content-Type, such as IoT/SDP or IoT/XML may be extended to indicate messages of the IoT, respectively, wherein SDP and XML indicate that an SDP or XML manner is used in the SIP message body to represent relevant information, respectively.

In Step S710, the SIP network detects the above-mentioned message, and it is judged that this is a message needing to be forwarded to the IoT application according to a filtering rule.

For example, it can be judged according to the fact that a destination address in the message is the address of the service of the IoT, or the detection also can be performed according to the fact that Content-Type at the header of the SIP message is IoT.

In Step S712, the IoT application receives relevant data, parses the SIP packet to obtain relevant data, and executes relevant logics according to service logics, thereby providing a specific service of the IoT.

In an example embodiment, the method may also include:
Step S714, the IoT is applied to the terminal for interaction.

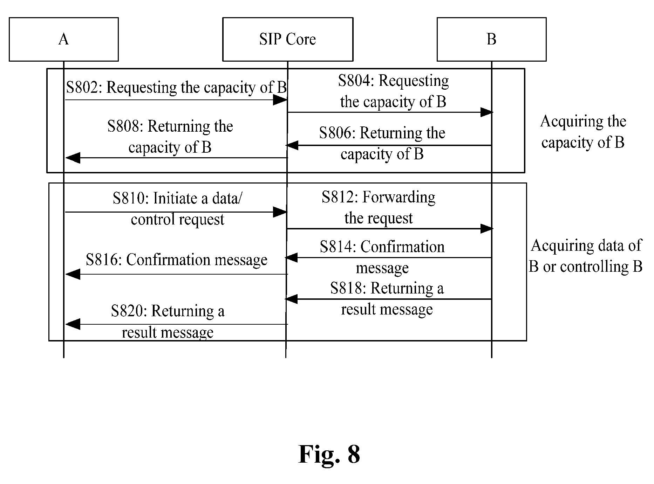

Fig. 8 is a flowchart of control without session process according to an embodiment of the present invention. Fig. 8 describes a method of acquiring data or controlling a terminal B by the interaction between a terminal A (control apparatus) and the terminal B supporting the service of the IoT. The above-mentioned control may take place in the session process between A and B, and also may be not in the session process.

Specifically, as shown in Fig. 8, steps S802-S808 are processes for a control side to acquire the capacity of B, and steps S810-S820 are processes for acquiring data of B or controlling B.

In Step S802, a request for acquiring the capacity of the controlled side B is sent by using an INFO message of the SIP.

For example, the INFO request message may be:

```
     INFO sip: a@zte.com.cn SIP/2.0
     Via SIP/2.0/UDP proxy.zte.com.cn
     Max-Forwards: 70
     Route: <sip:scscf1.home1.net;1r> <atcf.visited1.net;1r>
     From: A
     To: B
     IoT-ID: cb03a0s09a2sdfglkj490334
     Content-Type: IoT/XML
     Content-Length:
     <?xml version="1.0" encoding="US-ASCII"?>
     <msml version=" 1.1 ">
     <get temp>
          <id>sensor1</id>
          <time>20120528 12:00:00</time>
          <operate>get</operate>
     </get temp>
     </msml>
```

In Step S804, the request is forwarded to B via the SIP core.

In Step S806, the capacity of B is sent to the SIP Core via the extension of SDP, wherein SIP Core is an SIP network.

In an example embodiment, in the message returned from B, Content-Type in the header of SIP INFO may be extended to be an IoT type to indicate that this is IoT formation.

For example, the reply message may be:

```
     INFO sip: b@zte.com.cn SIP/2.0
     Via SIP/2.0/UDP proxy.zte.com.cn
     Max-Forwards: 70
     Route: <sip:scscf1.home1.net;1r> <atcf.visited1.net;1r>
     From: B
     To: A
     IoT-ID: cb03a0s09a2sdfglkj490334
     Content-Type: IoT/XML
     Content-Length:
     <?xml version="1.0" encoding="US-ASCII"?>
     <msml version=" 1.1">
     <get temp>
          <id>sensor1</id>
          <time>20120528 12:00:00</time>
          <temp>30</temp>
     </get temp>
     </msml>
```

In Step S806, the SIP Core forwards the capacity of B to A.

In practical application, if A has known the capacity of B, there is no need for A to acquire the capacity of B, then steps S802 to S808 can be omitted. In an example embodiment, the capacity of terminal B may be: which operations on which port/channel or acquiring information of a certain "thing".

In Step S810, the control side A sends a message for controlling or acquiring relevant information to the SIP Core (SIP Core may include but not limited to: soft switch or IMS core network).

In Step S812, the SIP Core forwards the message to the controlled side B.

In Step S814, the controlled side B sends a confirmation message to confirm that B has received the message, wherein the message may include information indicating that B is processing or refuses to process or is unable to identify the message or the like.

In Step S816, the confirmation message is forwarded to the control side A via the SIP Core.

In Step S818, after processing the control command or acquiring relevant data, B returns the result to the SIP Core. The data may be carried by an INFO message, wherein the ID in the header of the INFO message maintains to be consistent with the ID in a corresponding request message, Content-Type is set to be IoT/SDP or IoT/XML, the specific message content is described in an SDP or XML manner respectively, and the XML mode is recommended for description.

In Step S820, the SIP Core forwards the control command to the control side A.

It can be seen from the above description that the present invention implements the following technical effect. The terminal interacts with the IoT via SIP network, wherein the terminal supports an SIP protocol and possesses a function of communicating with the IoT device, using the terminal which supports an SIP protocol and possesses a function of communicating with the IoT device, the present invention can execute the interaction between the terminal and the IoT via SIP network, and implement the IoT application on the SIP network. Furthermore, various services of various IoTs can be developed in a relatively simple way in the existing SIP network and related network element, these services can well communicate with other network elements of the existing SIP network, and these services can be supported by the existing modes, which is beneficial for the popularization of the service of the IoT.

Obviously, those skilled in the art should know that each of the mentioned components or steps of the present invention can be implemented by universal computing devices; the components or steps can be focused on single computing device, or distributed on the network formed by multiple computing devices; selectively, they can be implemented by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be implemented. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection defined by the claims of the present invention.

## Claims

1. A method for implementing an Internet of Things (IoT) application, **characterized by** comprising:
a terminal interacting with an IoT via a Session Initiation Protocol (SIP) network, wherein the terminal supports an SIP protocol and possesses a function of communicating with an IoT device.

2. The method according to claim 1, **characterized in that** the terminal interacting with the IoT via the SIP network comprises:
the terminal acquiring data from an IoT device, encapsulating the data in an SIP manner, and sending the encapsulated data to the IoT via the SIP network; and/or
the terminal receiving information sent by the IoT via the SIP network and performing operation on the IoT device according to the information.

3. The method according to claim 2, **characterized in that** the terminal sending the encapsulated data to the IoT via the SIP network comprises:
the terminal sending the encapsulated data to the SIP network;
the SIP network receiving the encapsulated data, and judging whether the received data meet a trigger strategy of the IoT application;
if the received data meet the trigger strategy of the IoT application, the SIP network sending the received data to the IoT.

4. The method according to claim 2 or 3, **characterized in that** the terminal performing the operation on the IoT device according to the information comprises:
the terminal converting the information to be of a format supported by the IoT device and sending the converted information to the IoT device.

5. The method according to any one of claims 1 to 4, **characterized in that** before the terminal interacting with the IoT via the SIP network, the method further comprises:
the terminal receiving a control message sent by a control apparatus via the SIP network, wherein the control message is used for indicating the terminal to interact with the IoT according to the control message.

6. The method according to claim 5, **characterized in that** before the terminal receiving the control message sent by the control apparatus via the SIP network, the method further comprises:
the terminal receiving a capability acquisition request sent by the control apparatus via the SIP, wherein the capability acquisition request is used for acquiring capability information of the terminal;
the terminal reporting the capability information of the terminal to the control apparatus via the SIP network;
and the control apparatus sending the control message to the terminal according to the capability information of the terminal.

7. A device for implementing an Internet of Things (IoT) application, **characterized by** comprising:
an interaction component, configured to interact with an IoT via a Session Initiation Protocol (SIP) network, wherein the interaction component supports an SIP protocol and possesses a function of communicating with an IoT device.

8. The device according to claim 7, **characterized in that** the interaction component comprises:
a first processing unit, configured to acquire data from the IoT device, encapsulate the data in an SIP manner, and send the encapsulated data to the IoT via the SIP network; and/or
a second processing unit, configured to receive information sent by the IoT via the SIP network and perform operation on the IoT device according to the information.

9. The device according to claim 8, **characterized in that** the second processing unit comprises:
a converting unit, configured to convert the received information to be of a format supported by the IoT device;
and a sending unit, configured to send the converted information to the IoT device.

10. The device according to any one of claims 7 to 9, **characterized in that** the device further comprises:
a receiving component, configured to receive a control message sent by a control apparatus via the SIP network, wherein the control message is used for indicating the device for implementing the IoT application to interact with the IoT according to the control message.

11. The device according to claim 10, **characterized in that**
the receiving component is further configured to receive a capability acquisition request sent by the control apparatus via the SIP, wherein the capability acquisition request is used for acquiring capability information of the device for implementing the IoT application;
and the device for implementing the IoT application further comprises a sending component, configured to report the capability information of the device for implementing the IoT application to the control apparatus via the SIP network.

12. A terminal, **characterized by** comprising the device for implementing the IoT application in any one of claims 7 to 11.
